# EUROPÄISCHE PATENTSCHRIFT

(11) **EP 0 908 336 B1**
(45) Veröffentlichungstag und Bekanntmachung des Hinweises auf die Patenterteilung: **30.03.2005**
(21) Anmeldenummer: 98116155.7
(22) Anmeldetag: 27.08.1998
(51) Int. Cl.: B60H 1/00

(54) **Klima- oder Heizungsanlage für Grossraumfahrzeuge**
Air conditioning or heating system for large-volume vehicles
Installation de climatisation ou de chauffage pour véhicules de grand volume

(30) Priorität: 10.10.1997 DE 19744716
(43) Veröffentlichungstag der Anmeldung: 14.04.1999
(73) Patentinhaber: EvoBus GmbH, 70567 Stuttgart (DE)
(72) Erfinder: Duppui, Jochen, 70435 Stuttgart (DE); Flecksteiner, Christian, 70771 Leinfelden-Echterdingen (DE)
(74) Vertreter: Brückner, Ingo Andreas

(56) Entgegenhaltungen:
- DE-A- 4 435 292
- DE-A- 19 510 396
- GB-A- 2 201 767

## Beschreibung

Die Erfindung betrifft eine Klima- oder Heizungsanlage für Großraumfahrzeuge, insbesondere für Omnibusse, gemäß dem Oberbegriff des Patentanspruchs 1.

Bei einer bekannten Klimaanlage dieser Art (DE 195 35 290 C1), die für den Kinbau in einem Dachkanal eines Omnibusses konzipiert ist, wird von zwei einem Wärmetauscher nachgeordneten Radialventilatoren über eine Frischluftöffnung und eine Umluftöffnung je nach Stellung einer diese Öffnungen steuernden Luftklappe Frischluft aus der Fahrzeugumgebung oder Umluft aus dem Fahrzeuginnenraum angesaugt und in den Dachkanal zur Verteilung über den Fahrzeuginnenraum eingeblasen. Um bei vorgegebenem Einbauvolumen eine möglichst hohe Luftmenge zu erreichen, sind die Radialventilatoren austrittsseitig an eine Zwischenkammer so angeschlossen, daß keine gegenseitige Beeinflussung der Ventilatoren durch die ausströmende Luft entsteht und daß der dynamische Druckanteil in den Austrittsöffnungen der Radialventilatoren zu einem hohen Prozentsatz in statischen Druck umgesetzt wird. Hierzu ist die Zwischenkammer in zwei übereinanderliegende Kammern unterteilt und jeder Ventilatoreingang an eine Kammer angeschlossen. An allen Kammern ist austrittsseitig ein Diffusor angebracht, der einen Geschwindigkeitsabbau der strömenden Luft und damit einen Abbau an statischem Druck ermöglicht.

Der Erfindung liegt die Aufgabe zugrunde, bei einer Klimaoder Heizungsanlage der eingangs genannten Art die Effizienz der Entlüftung und der Belüftung mit aufgeheizter oder gekühlter Luft wesentlich zu verbessern.

Die Aufgabe ist erfindungsgemäß durch die Merkmale im Patentanspruch 1 gelöst.

Die erfindungsgemäße Klima- oder Heizungsanlage hat den Vorteil, daß durch die getrennte Abschöpfung und Aufbereitung von Frischluft und Umluft in parallelen Luftführungskästen, die beide ausgangsseitig im Fahrzeuginnenraum münden, ein größerer Luftdurchsatz sowohl bei Entlüftung als auch bei Belüftung mit konditionierter oder unkonditionierter Luft erzielt wird, so daß ein schnellerer Luftaustausch möglich wird, ohne daß die Lüftergeräusche in nicht akzeptabler Weise ansteigen. Bessere Luftumwälzung führt in einer Großraumlimousine langfristig zu einem angenehmeren Klimagefühl und verbessert das Wohlbefinden der Fahrgäste erheblich.

Vorteilhafte Ausführungsformen der erfindungsgemäßen Klimaoder Heizungsanlage mit zweckmäßigen Weiterbildungen und Ausgestaltungen der Erfindung sind in den weiteren Patentansprüchen angegeben.

Gemäß einer bevorzugten Ausführungsform der Erfindung umfassen die Luftansaug- und konditioniermittel in jedem Luftführungskasten ein Gebläse sowie einen Wärmetauscher und/oder einen Verdampfer eines Kälteaggregats. Im Fahrzeuginnenraum ist eine Rückluftöffnung und in dem die Umluft führenden Luftführungskasten eine Abluftöffnung vorgesehen, über die jeweils Luft in die Fahrzeugumgebung ausströmen kann. Steuermittel in Form von schwenkbaren Luftklappen dienen zum wahlweisen Schließen und Freigeben der Luftöffnungen. Aufgrund dieser konstruktiven Maßnahmen ist es durch entsprechende Einschaltung der beiden Gebläse und selektive Steuerung der einzelnen Luftöffnungen möglich, verschiedene Betriebsmodi zu realisieren, die insgesamt eine optimale Klimatisierung der Großraumlinousine ermöglichen.

Die Erfindung ist anhand eines in der Zeichnung dargestellten Ausführungsbeispiels im folgenden näher beschrieben. Es zeigen jeweils in schematischer Darstellung:
- Fig. 1: eine perspektivische Ansicht einer auf dem Dach eines Omnibusses angeordneten Heizungsanlage, teilweise aufgeschnitten,
- Fig. 2a: einen Schnitt längs der Linie a-a in Fig. 1 im Betriebsmodus "Entlüften/Belüften"
- Fig. 2b: einen Schnitt längs der Linie b-b in Fig. 1 im Betriebsmodus "Belüften/Entlüften",
- Fig. 3a: einen Schnitt längs der Linie a-a in Fig. 1 im Betriebsmodus "Klimatisieren mit Entlüften",
- Fig. 3b: einen Schnitt längs der Linie b-b in Fig. 1 im Betriebsmodus "Klimatisieren mit Entlüften",
- Fig. 4a: einen Schnitt längs der Linie a-a in Fig. 1 beim Betriebsmodus "Klimatisieren ohne Entlüften",
- Fig. 4b: einen Schnitt längs der Linie b-b in Fig . 1 beim Betriebsmodus "Klimatisieren ohne Entlüften".

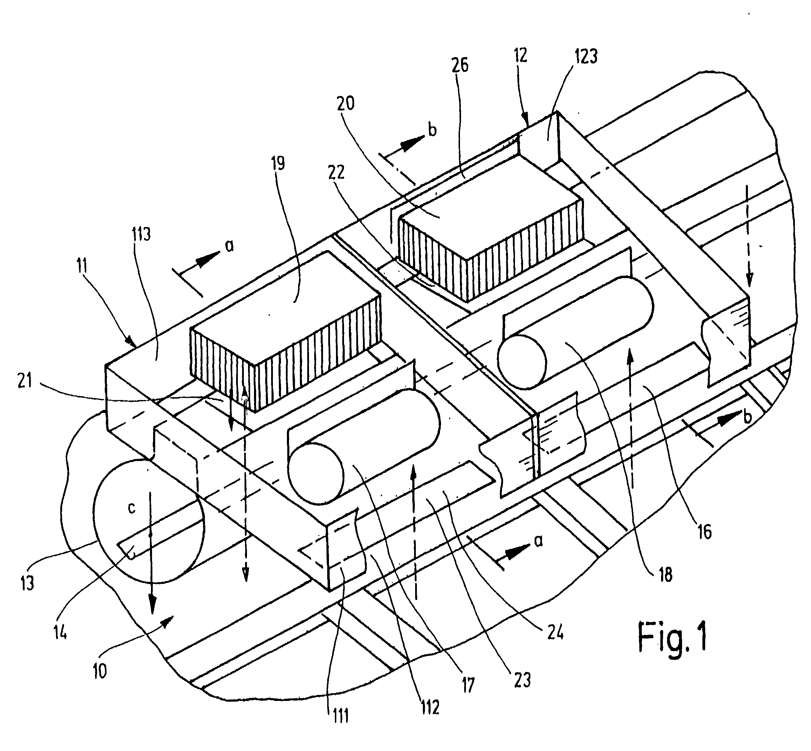

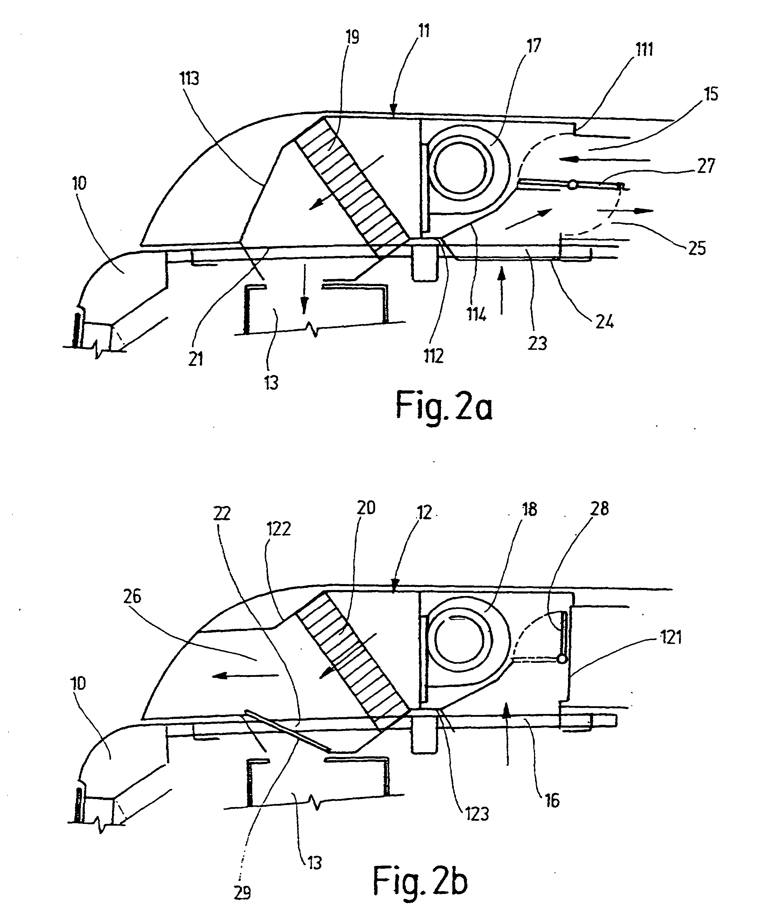

Die in Fig. 1 schematisch in perspektivischer Darstellung und in Fig. 2 - 4 in verschiedenen Schnittdarstellungen zu sehende Heizungsanlage ist für den Einsatz in einem Großraumfahrzeug, z.B. Omnibus, konzipiert und ist auf dem Dach 10 des Großraumfahrzeugs angeordnet. Sie weist zwei voneinander getrennte Luftführungskästen 11, 12 auf, die nebeneinander angeordnet sind und ausgangsseitig in einem Luftkanal 13 münden, der sich längs des Daches 10 des Großraumfahrzeugs erstreckt und mit Luftauslässen 14 zum Fahrzeuginnenraum hin versehen ist. Die Luftauslässe 14 können von im Abstand voneinander angeordnete Kanaldurchbrüchen oder - wie dies in Fig. 1 dargestellt ist - von einem durchgehenden Schlitz gebildet werden. Der eine Luftführungskasten 11, im folgenden Frischluft-Führungskasten 11 genannt, ist eingangsseitig an einer Frischluftöffnung 15 zur Fahrzeugumgebung angeschlossen, während der andere Luftführungskasten 12, im folgenden Umluft-Führungskasten 12 genannt, an einer Umluftöffnung 16 zum Fahrzeuginnenraum angeschlossen ist. Jeder Luftführungskasten 11,12 ist mit einem Gebläse 17 bzw. 18 und einem Wärmetauscher 19 bzw. 20 ausgestattet, wobei die Ansaugöffnungen der Gebläse 17,18 der Frischluftöffnung 15 bzw. der Umluftöffnung 16 und die Auslässe der Gebläse 17,18 den Wärmetauschern 19,20 zugekehrt sind. Die Wärmetauscher 19,20 sind in bekannter Weise von dem in der Brennkraftmaschine aufgeheizten Kühlwasser durchflossen, wobei die Heizleistung durch Drosselung des Kühlwasserstroms eingestellt werden kann. Wie aus den Fig. 2 - 4 hervorgeht, sind die Wärmetauscher 19,20 um ca. 45° geneigt angeordnet, so daß der vom Gebläse 17 bzw. 18 erzeugte Luftstrom den Wärmetauscher 19 bzw. 20 durchströmt und über die Mündungsöffnung 21 bzw. 22 im Boden 112 bzw. 122 der Luftführungskästen 11,12 in den Luftkanal 13 eintritt. Über die Luftauslässe 14 verteilt dann der Luftkanal 13 die Luft in den Fahrzeuginnenraum.

Wie aus den Fig. 2 - 4 ersichtlich und in Fig. 1 nicht weiter dargestellt ist, ist im Dach 10 der Großraumlimousine eine Rückluftöffnung 23 vorgesehen, die kongruent mit einem Lufteinlaß 24 im Frischluft-Führungskasten 11 angeordnet ist. Der Lufteinlaß 24 liegt nahe eines unterhalb der Frischluftöffnung 15 angeordneten Luftauslasses 25 im Frischluft-Führungskasten 11, wobei die Frischluftöffnung 15 und der Luftauslaß 25 in der einen Seitenwand 111 des Frischluft-Führungskastens 11 und der Lufteinlaß 24 in dem auf den Dach 10 aufliegenden Boden 112 des Frischluft-Führungskastens 11 angeordnet ist. Ein im Innern des Frischluft-Führungskastens 11 verlaufendes Wandteil 114 ist so angeordnet, daß der Lufteinlaß 24 bzw. die Rückluftöffnung 23 gegenüber der Frischluftöffnung 15 abgeschirmt ist und ausschließlich mit den Luftauslaß 25 in Verbindung steht. Die der Seitenwand 111 gegenüberliegende Seitenwand 113 des Frischluft-Führungskastens 11 ist geschossen ausgeführt. Im Umluft-Führungskasten 12 ist in der der Mündungsöffnung 22 naheliegenden Seitenwand 123 des Umluft-Führungskastens 12 eine Abluftöffnung 26 vorgesehen, über die vom Gebläse 18 durch die Umluftöffnung 16 hindurch aus dem Fahrzeuginnenraum angesaugte Umluft in die Fahrzeugumgebung ausgeblasen werden kann. Die der Seitenwand 123 gegenüberliegende Seitenwand 121 des Umluft-Führungskastens 12 ist geschlossen ausgeführt.

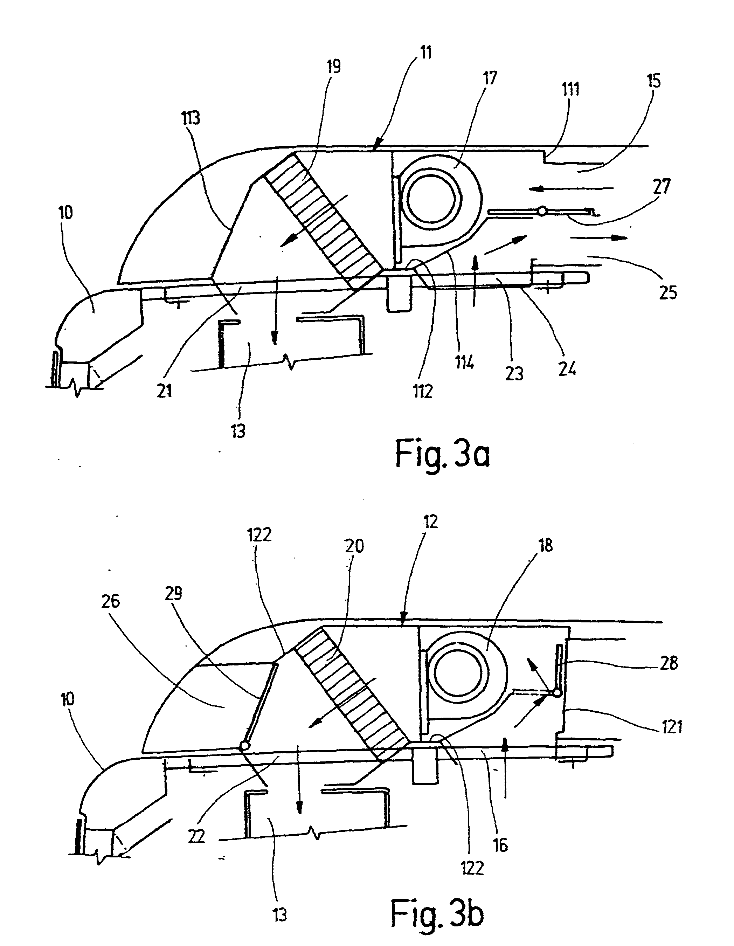

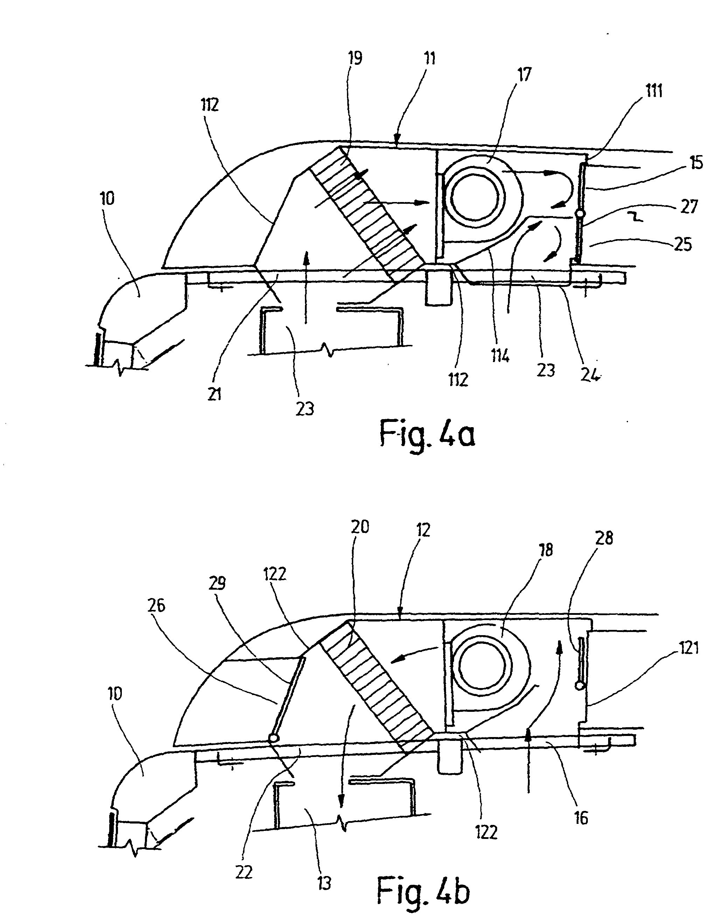

Wie aus Fig. 2 - 4 ersichtlich und in Fig. 1 nicht weiter dargestellt ist, sind Steuermittel in Form von Luftklappen zur Steuerung der Luftöffnungen, wie Frischluftöffnung 15, Luftauslaß 25, Umluftöffnung 16, Mündungsöffnung 22 und Abluftöffnung 26 vorgesehen. Im einzelnen ist im Frischluft-Führungskasten 11 eine schwenkbare, zweiflügelige erste Rückstauklappe 27 so angeordnet, daß sie in einer ersten Schwenkstellung Frischluftöffnung 15 und Luftauslaß 25 absperrt (Fig. 4a) und in einer zweiten Schwenkstellung Frischluftöffnung 15 und Luftauslaß 25 freigibt (Fig. 2a und 3a). Im Umluft-Luftführungskasten 12 ist eine zweite, hier einflügelig ausgebildete Rückstauklappe 28 so angeordnet, daß sie die Umluftöffnung 16 in einer ersten Schwenkstellung absperrt (in Fig. 2b und 3b strichliniert dargestellt) und in einer zweiten Schwenkstellung freigibt (in Fig. 2b, 3b und Fig. 4b ausgezogen dargestellt). Des weiteren ist in dem Umluft-Führungskasten 12 eine schwenkbare Luftklappe 29 so angeordnet, daß sie in einer ersten Schwenkstellung die Abluftöffnung 26 in der Seitenwand 123 sperrt und die Mündungsöffnung 22 im Boden 122 des Umluft-Führungskastens 12 zum Luftkanal 13 hin freigibt (Fig. 3b und 4b) und in einer zweiten Schwenkstellung umgekehrt die Abluftöffnung 26 freigibt und die Mündungsöffnung 22 absperrt (Fig. 2b). Die Luftklappe 29 ist elektrisch schwenkbar, während die beiden Rückstauklappen 27,28 von der Saugwirkung des ihnen zugeordneten Gebläses 17 bzw. 18 in ihre zweite Schwenkstellung überführt werden und bei Abschalten des Gebläses 17 bzw. 18 selbsttätig in ihre erste Schwenkstellung zurückfallen.

In Fig. 2a und 2b ist die Klappenstellung der Klappen 27 - 29 in dem Betriebsmodus "Belüften/Entlüften" dargestellt. In diesem Fall sind die beiden Wärmetauscher 19,20 inaktiv, d.h. nicht vom Kühlwasser der Brennkraftmaschine durchströmt. Das Gebläse 17 im Frischluft-Führungskasten 11 ist eingeschaltet. Infolge des vom Gebläse 17 erzeugten Saugdrucks schwenkt die erste Rückstauklappe 27 in ihre zweite Schwenkstellung, so daß sie die Frischluftöffnung 15 und den Luftauslaß 25 zur Fahrzeugumgebung freigibt. Das Gebläse 17 saugt nunmehr über die Frischluftöffnung 15 Frischluft an und fördert sie in den Luftkanal 13, wo sie über die Luftauslässe 14 im Fahrzeuginnenraum verteilt wird. Diese Luft bildet an der Rückluftöffnung 24 einen Überdruck, der an der ersten Rückstauklappe 27 ansteht und deren Überführen in die zweite Schwenkstellung unterstützt. In diesem Betriebsmodus wird im Umluft-Führungskasten 12 die Luftklappe 29 elektrisch in ihre zweite Schwenkstellung überführt (Fig. 2b), in welcher sie die Mündungsöffnung 22 zum Luftkanal 13 abdeckt und die Abluftöffnung 26 zur Fahrzeugumgebung freigibt. Das Gebläse 18 im Umluft-Führungskasten 12 kann nunmehr wahlweise eingeschaltet oder ausgeschaltet sein. Ist das Gebläse 17 eingeschaltet - wie dies an den in Fig. 2b eingezeichneten Luftströmungspfeilen verdeutlicht ist - so wird Umluft über die Umluftöffnung 16 aus dem Fahrzeuginnenraum angesaugt, wobei durch den vom Gebläse 18 erzeugten Saugdruck die zweite Rückstauklappe 28 ihre in Fig. 2b ausgezogen dargestellte zweite Schwenkstellung einnimmt und die Umluftöffnung 16 freigibt. Die über die Umluftöffnung 16 abgesaugte Umluft wird über die geöffnete Abluftöffnung 26 in die Fahrzeugumgebung ausgeblasen. Ist das Gebläse 18 nicht eingeschaltet, so nimmt die zweite Rückstauklappe 28 ihre in Fig. 2b strichliniert dargestellte erste Schwenkstellung ein, in welcher sie die Umluftöffnung 16 absperrt. Dadurch wird verhindert, daß Frischluft über die Abluftöffnung 26, den Wärmetauscher 20 und über die Umluftöffnung 16 in den Fahrzeuginnenraum gelangen kann.

In Fig. 3a und Fig. 3b ist die Klappenstellung im Betriebsmodus "Klimatisieren mit Entlüften" dargestellt. In diesem Fall sind die beiden Wärmetauscher 19,20 vom Kühlwasser der Brennkraftmaschine durchströmt und geben Wärme an die sie durchströmende Luft ab. Das Gebläse 17 ist eingeschaltet, wodurch die erste Rückstauklappe 27 in ihre zweite Schwenkstellung überführt wird und dadurch die Frischluftöffnung 15 und den Luftauslaß 25 freigibt. Das Gebläse 17 saugt Frischluft an, die im Wärmetauscher 19 aufgeheizt und über die Mündungsöffnung 21 und dem Luftkanal 13 dem Fahrzeuginnenraum zugeführt wird. Die Entlüftung erfolgt über die Rückluftöffnung 23 und den Luftauslaß 25. Im Umluft-Führungskasten 12 nimmt die Luftklappe 29 ihre erste Schwenkstellung ein, so daß die Abluftöffnung 26 verschlossen und die Mündungsöffnung 22 zum Luftkanal 13 freigegeben ist. Das Gebläse 18 im Umluft-Führungskasten 12 kan nunmehr wahlweise eingeschaltet oder abgeschaltet sein. Im ersten Fall wird Umluft aus dem Fahrzeuginnenraum über die Umluftöffnung 16 abgesaugt, im Wärmetauscher 20 erwärmt und über die Mündungsöffnung 22 und die Luftauslässe 14 im Luftkanal 13 dem Fahrzeuginnenraum wieder zugeführt. Die Entlüftung erfolgt ausschließlich über die Rückluftöffnung 23 und den Luftauslaß 25 im Frischluft-Führungskasten 11. Bei abgeschaltetem Gebläse 18 im Umluft-Führungskasten 12 verhindert die in ihrer ersten Schwenkstellung verbleibende zweite Rückstauklappe 28 aufgeheizte Frischluft aus dem Luftkanal 13 in den Umluftbereich strömt.

In Fig. 4a und 4b ist die Klappstellung für den Betriebsmodus "Klimatisieren ohne Entlüften" dargestellt. Die beiden Wärmetauscher 19,20 sind wieder aktiv, d.h. vom Kühlwasser der Brennkraftmaschine durchflossen, und geben Wärme an die sie durchströmende Luft ab. In diesem Betriebsmodus ist nur das Gebläse 18 im Umluft-Führungskasten 12 eingeschaltet. Der Saugdruck des Gebläses 18 überführt die zweite Rückstauklappe 28 in ihre die Umluftöffnung 16 freigebende Offenstellung (Fig. 4b). Die vom Gebläse 18 über die Umluftöffnung 16 aus dem Fahrzeuginnenraum abgesaugte Luft durchströmt den Wärmetauscher 20 und gelangt bei in ihrer ersten Schließstellung sich befindlichen Luftklappe 29 über die geöffnete Mündungsöffnung 22 in den Luftkanal 13, um hier durch Luftauslässe 14 in den Fahrzeuginnenraum einzutreten. Da das Gebläse 17 im Frischluft-Führungskasten 11 nicht eingeschaltet ist, steht durch den Überdruck im Luftkanal 13 auch an der Innenseite der ersten Rückstauklappe 27 ein Überdruck an und hält die erste Rückstauklappe 27 in ihrer ersten Schwenkstellung, so daß keine Frischluft über die Frischluftöffnung 15 eindringen kann. Da bei dieser Schwenkstellung der ersten Rückstauklappe 27 auch der Luftauslaß 25 geschlossen ist, kann auch keine Frischluft über den Luftauslaß 25 und die Rückluftöffnung 23 in den Fahrzeuginnenraum eindringen.

Die Erfindung ist nicht auf die vorstehend beschriebene Heizungsanlage für Großraumfahrzeuge beschränkt. Wird in jedem Luftführungskasten 11 bzw. 12 dem dort angeordneten Wärmetauscher 19 bzw. 20 ein Verdampfer eines Kälteaggregats im Luftstrom vorgeordnet, so kann die vom Gebläse 17,18 geförderte Luft nicht nur über die Wärmetauscher 19,20 aufgeheizt sonder auch über die Verdampfer gekühlt werden. Damit ergibt sich eine Klimaanlage für Großraumfahrzeuge, die die gleichen Vorteile aufweist wie die vorstehend beschriebene Heizungsanlage. In den Betriebsmodi "Klimatisieren mit Entlüften" und "Klimatisieren ohne Entlüften" kann der Fahrzeuginnenraum dann nicht nur aufgeheizt sondern auch gekühlt werden oder durch aufeinanderfolgendes Kühlen und Aufheizen der Luft in den Luftführungskästen 11,12 entfeuchtet werden.

## Patentansprüche

1. Klima- oder Heizungsanlage für Großraumfahrzeuge, insbesondere für Omnibusse, mit einer Frischluftöffnung zur Fahrzeugumgebung, mit einer Umluftöffnung zum Fahrzeuginnenraum, mit im Fahrzeuginnenraum mündenden Luftauslässen, sowie mit Luftansaugmitteln zum Ansaugen von Frischluft und/oder Umluft und Luftkonditioniermitteln zum Temperieren der über die Luftauslässe in den Fahrzeuginnenraum eingeblasenen Luft,
**dadurch gekennzeichnet,**
**daß** die Luftansaug- und -konditioniermittel in zwei getrennten Luftführungskästen (11,12) integriert sind, von denen der eine Luftführungskasten (11) eingangsseitig an der Frischluftöffnug (15) und der andere Luftführungskasten (12) eingangsseitig an der Umluftöffnung (16) angeschlossen sind und beide Luftführungskästen (11,12) ausgangsseitig in einem die Luftauslässe (18) aufweisenden Luftkanal (13) münden.

2. Anlage nach Anspruch 1,
**dadurch gekennzeichnet,**
**daß** die Luftansaug- und -konditioniermittel in jedem Luftführungskasten (11,12) ein Gebläse (17,18) sowie einen Wärmetauscher (19,20) und/oder einen Verdampfer eines Kälteaggregats umfassen.

3. Anlage nach Anspruch 2,
**dadurch gekennzeichnet,**
**daß** im Fahrzeuginnenraum eine Rückluftöffnung (23) und im Umluft-Luftführungskasten (12) eine Abluftöffnung (26) jeweils zum Ausströmen von Luft in die Fahrzeugumgebung angeordnet sind und daß Steuermittel zum Schließen und Freigeben der Luftöffnungen vorgesehen sind.

4. Anlage nach Anspruch 3,
**dadurch gekennzeichnet,**
**daß** im Frischluft-Führungskasten (11) ein nahe der Frischluftöffnung (15) liegender Luftauslaß (25) und ein mit der Rückluftöffnung (23) kongruenter, mit dem Luftauslaß (25) in Verbindung stehender Lufteinlaß (24) vorgesehen sind und daß die Steuermittel im Frischluft-Führungskasten (11) eine schwenkbare erste Rückstauklappe (27) aufweisen, die so angeordnet ist, daß sie die Frischluftöffnung (15) und den Luftauslaß (25) in einer ersten Schwenkstellung absperrt und in einer zweiten Schwenkstellung freigibt.

5. Anlage nach Anspruch 4,
**dadurch gekennzeichnet,**
**daß** die erste Rückstauklappe (27) zweiflügelig so ausgebildet ist, daß sie bei abgeschaltetem Gebläse (17) ihre erste Schwenkstellung und bei eingeschaltetem Gebläse (17) ihre zweite Schwenkstellung einnimmt.

6. Anlage nach einem der Ansprüche 3 - 5,
**dadurch gekennzeichnet,**
**daß** die Steuermittel im Umluft-Führungskasten (12) eine vorzugsweise elektrisch schwenkbare Luftklappe (29) aufweisen, die im Umluft-Führungskasten (12) so angeordnet ist, daß sie in einer ersten Schwenkstellung die Abluftöffnung (26) absperrt und die Mündungsöffnung (22) des Umluft-Führungskastens (12) zum Luftkanal (13) freigibt und in einer zweiten Schwenkstellung umgekehrt die Abluftöffnung (26) freigibt und die Mündungsöffnung (22) absperrt.

7. Anlage nach einem der Ansprüche 3 - 6,
**dadurch gekennzeichnet,**
**daß** die Steuermittel im Umluft-Führungskasten (12) eine schwenkbare zweite Rückstauklappe (28) aufweisen, die im Umluft-Führungskasten (12) so angeordnet ist, daß sie die Umluftöffnung (16) in einer ersten Schwenkstellung absperrt und in einer zweiten Schwenkstellung freigibt.

8. Anlage nach Anspruch 7,
**dadurch gekennzeichnet,**
**daß** die zweite Rückstauklappe (28) einflügelig so ausgebildet ist, daß sie bei abgeschaltetem Gebläse (18) ihre erste Schwenkstellung und bei eingeschaltetem Gebläse (18) ihre zweite Schwenkstellung einnimmt.

9. Anlage nach Anspruch 8,
**dadurch gekennzeichnet,**
**daß** in einem Betriebsmodus "Belüften/Entlüften" bei inaktiven Wärmetauschern (19,20) und/oder Verdampfern das Gebläse (17) im Frischluft-Führungskasten (11) eingeschaltet und die Luftklappe (29) im Umluft-Führungskasten (12) in ihre zweite Schwenkstellung überführt ist, sowie das Gebläse (18) im Umluft-Führungskasten (12) wahlweise ein- oder abgeschaltet ist.

10. Anlage nach Anspruch 8 oder 9,
**dadurch gekennzeichnet,**
**daß** in einem Betriebsmodus "Klimatisieren mit Entlüften" bei aktiven Wärmetauschern (19,20) und/oder Verdampfern das Gebläse (17) im Frischluft-Führungskasten (11) eingeschaltet und die Luftklappe (29) im Umluft-Führungskasten (12) in ihre erste Schwenkstellung überführt ist, sowie das Gebläse (18) im Umluft-Führungskasten (12) wahlweise ein- oder ausgeschaltet ist.

11. Anlage nach einem der Ansprüche 8 - 10,
**dadurch gekennzeichnet,**
**daß** in einem Betriebsmodus "Klimatisieren ohne Entlüften" bei aktiven Wärmetauschern (19,20) und/oder Verdampfern das Gebläse (18) im Umluft-Führungskasten (12) eingeschaltet und die Luftklappe (29) im Umluft-Führungskasten (12) in ihre erste Schwenkstellung überführt ist, sowie das Gebläse (17) im Frischluft-Führungskasten (11) abgeschaltet ist.

## Claims

1. An air-conditioning or heating system for large capacity vehicles, in particular for busses, having a fresh air opening to the environment outside the vehicle, a recirculating air opening to the vehicle interior, air outlets feeding into the vehicle interior, and with air intake means for taking in fresh air and/or recirculating air and air conditioning means for conditioning the air blown into the vehicle interior through the air outlets,
**characterised in that**,
the air intake and conditioning means are integrated in two separate air circulation boxes (11, 12), the inlet side of one air circulation box (11) being connected to the fresh air opening (15), the inlet side of the other air circulation box (12) being connected to the recirculating air opening (16) and the output sides of both air circulation boxes (11, 12) feeding into an air duct (13) featuring the air outlets (18).

2. A system in accordance with claim 1,
**characterised in that**,
the air intake and conditioning means in each air circulation box (11, 12) comprise a fan (17, 18) and a heat exchanger (19, 20) and/or an evaporator of a refrigerating unit.

3. A system in accordance with claim 2,
**characterised in that,**
positioned in the vehicle interior is a return opening (23) and positioned in the recirculating air circulation box (12) is an air evacuation opening (26) through which air is able to flow out into the environment outside the vehicle and also provided are control means to close and open the air openings.

4. A system in accordance with claim 3,
**characterised in that**,
provided in the fresh air recirculating box (11) is an air outlet (25) which lies close to the fresh air opening (15) and an air inlet (24) congruent with the return air opening (23) and connected to the air outlet (25), and the control means in the fresh air circulation box (11) have a first hinged no-return damper (27) which is positioned such that it blocks the fresh air opening (15) and the air outlet (25) in a first position and releases them in a second position.

5. A system in accordance with claim 4,
**characterised in that**,
the first no-return damper (27) is double-bladed and of such a design that when the fan (17) is switched off its assumes its first position and when the fan (17) is switched on it assumes its second position.

6. A system in accordance with one of claims 3 to 5,
**characterised in that**,
the control means in the recirculating air circulation box (12) have a preferably electrically switchable damper (29) which is positioned in the recirculating air circulation box (12) in such a manner that it blocks the air evacuation opening (26) and releases the feed opening (22) of the recirculating air circulation box (12) to the air duct (13) in a first position and, conversely, releases the air evacuation opening (26) and blocks the feed opening (22) in a second position.

7. A system in accordance with one of claims 3 to 6,
**characterised in that**,
the control means in the recirculating air circulation box (12) have a hinged second damper (28) which is positioned in the recirculating air circulation box (12) in such a manner that it blocks the recirculating air opening (26) in a first position and releases it in a second position.

8. A system in accordance with claim 7,
**characterised in that**,
the second no-return damper (28) is single-bladed and of such a design that when the fan (18) is switched off its assumes its first position and when the fan (18) is switched on it assumes its second position.

9. A system in accordance with claim 8,
**characterised in that**,
in an "aeration/deaeration" operating mode in which the heat exchangers (19, 24) and/or evaporators are inactive, the fan (17) in the fresh air circulation box (11) is switched on, the damper (29) in the recirculating air circulation box (12) is switched to its second position and the fan (18) in the recirculating air circulation box (12) may either switched on or switched off.

10. A system in accordance with claim 8 or 9,
**characterised in that**,
in an "air conditioning with deaeration" operating mode in which the heat exchangers (19, 20) and/or evaporators are active, the fan (17) in the fresh air circulation box (11) is switched on, the damper (29) in the recirculating air circulation box (12) is switched to its first position and the fan (18) in the recirculating air circulation box (12) may either switched on or switched off.

11. A system in accordance with one of claims 8 to 10,
**characterised in that**,
in an "air conditioning without deaeration" operating mode in which the heat exchangers (19, 20) and/or evaporators are active, the fan (18) in the recirculating air circulation box (12) is switched on, the damper (29) in the recirculating air circulation box (12) is switched to its first position and the fan (17) in the fresh air circulation box (11) is switched off.

## Revendications

1. Installation de climatisation ou de chauffage pour véhicules de grand volume, en particulier pour autobus, avec un orifice d'air frais vers l'environnement du véhicule, avec un orifice d'air recyclé vers l'intérieur du véhicule, avec des échappements d'air débouchant à l'intérieur du véhicule, et avec des moyens d'aspiration d'air pour l'aspiration d'air frais et/ou d'air recyclé et des moyens de conditionnement d'air pour équilibrer la température de l'air insufflé à l'intérieur du véhicule par l'intermédiaire des échappements d'air,
**caractérisée en ce que**
les moyens d'aspiration et de conditionnement d'air sont intégrés dans deux boîtiers de guidage d'air séparés (11, 12) dont un boîtier de guidage d'air (11) est raccordé du côté de l'arrivée à l'orifice d'air frais (15) et l'autre boîtier de guidage d'air (12) est raccordé du côté de l'arrivée à l'orifice d'air recyclé (16) et les deux boîtiers de guidage d'air (11, 12) débouchent du côté de la sortie dans un conduit d'air (13) comportant les échappements d'air (18).

2. Installation selon la revendication 1,
**caractérisée en ce que**
les moyens d'aspiration et de conditionnement d'air dans chaque boîtier de guidage d'air (11, 12) comprennent un ventilateur (17, 18) ainsi qu'un échangeur de chaleur (19, 20) et/ou un évaporateur d'un groupe frigorifique.

3. Installation selon la revendication 2,
**caractérisée en ce que**,
un orifice d'air de retour (23) est disposé à l'intérieur du véhicule et un orifice d'air d'extraction (26) est disposé dans le boîtier de guidage d'air recyclé (12) pour le dégagement d'air dans l'environnement du véhicule et **en ce que** des moyens de commande sont prévus pour la fermeture et la libération des orifices d'air.

4. Installation selon la revendication 3,
**caractérisée en ce que**
un échappement d'air (25) situé près de l'orifice d'air frais (15) et une admission d'air (24) adaptée à l'orifice d'air de retour (23), communiquant avec l'échappement d'air (25), sont prévus dans le boîtier de guidage d'air frais (11) et **en ce que** les moyens de commande dans le boîtier de guidage d'air frais (11) comportent un premier clapet de retenue pivotant (27) qui est disposé de telle manière qu'il obture l'orifice d'air frais (15) et l'échappement d'air (25) dans une première position de pivotement et qu'il les libère dans une seconde position de pivotement.

5. Installation selon la revendication 4,
**caractérisée en ce que**
le premier clapet de retenue (27) est construit avec deux battants de manière à prendre sa première position de pivotement lorsque le ventilateur (17) est hors service et sa seconde position de pivotement lorsque le ventilateur (17) est en service.

6. Installation selon l'une quelconque des revendications 3 à 5,
**caractérisée en ce que**
les moyens de commande dans le boîtier de guidage d'air recyclé (12) comportent un volet d'aération (29) pivotant de préférence électriquement qui est disposé dans le boîtier de guidage d'air recyclé (12) de telle manière qu'il obture l'orifice d'air d'extraction (26) et qu'il libère l'orifice d'embouchure (22) du boîtier de guidage d'air recyclé (12) vers le conduit d'air (13) dans une première position de pivotement et que, inversement, dans une seconde position de pivotement, il libère l'orifice d'air d'extraction (26) et il obture l'orifice d'embouchure (22).

7. Installation selon l'une quelconque des revendications 3 à 6,
**caractérisée en ce que**
les moyens de commande dans le boîtier de guidage d'air recyclé (12) comportent un second clapet de retenue pivotant (28) qui est disposé de telle manière dans le boîtier de guidage d'air recyclé (12) qu'il obture l'orifice d'air recyclé (16) dans une première position de pivotement et qu'il le libère dans une seconde position de pivotement.

8. Installation selon la revendication 7,
**caractérisée en ce que**
le second clapet de retenue (28) est construit avec un battant de manière à prendre sa première position de pivotement lorsque le ventilateur (18) est hors service et sa seconde position de pivotement lorsque le ventilateur (18) est en service.

9. Installation selon la revendication 8,
**caractérisée en ce que**,
en mode de fonctionnement "aérage/désaérage", avec les échangeurs de chaleur (19, 20) et/ou les vaporisateurs inactifs, le ventilateur (17) est mis en service dans le boîtier de guidage d'air frais (11) et le volet d'aération (29) dans le boîtier de guidage d'air recyclé (12) est placé dans sa seconde position de pivotement, et le ventilateur (18) dans le boîtier de guidage d'air recyclé (12) est mis, au choix, en service ou hors service.

10. Installation selon la revendication 8 ou 9,
**caractérisée en ce que**,
en mode de fonctionnement "climatisation avec désaérage", avec les échangeurs de chaleur (19, 20) et/ou les vaporisateurs actifs, le ventilateur (17) est mis en service dans le boîtier de guidage d'air frais (11) et le volet d'aération (29) dans le boîtier de guidage d'air recyclé (12) est placé dans sa première position de pivotement, et le ventilateur (18) dans le boîtier de guidage d'air recyclé (12) est mis, au choix, en service ou hors service.

11. Installation selon l'une quelconque des revendications 8 à 10,
**caractérisée en ce que**,
en mode de fonctionnement "climatisation avec désaérage", avec les échangeurs de chaleur (19, 20) et/ou les vaporisateurs actifs, le ventilateur (18) dans le boîtier de guidage d'air recyclé (12) est mis en service et le volet d'aération (29) dans le boîtier de guidage d'air recyclé (12) est placé dans sa première position de pivotement, et le ventilateur (17) dans le boîtier de guidage d'air frais (11) est mis hors service.
